# EUROPEAN PATENT APPLICATION

(11) **EP 4 753 081 A1**
(43) Date of publication of application: **03.06.2026**
(21) Application number: 25218581.4
(22) Date of filing: 26.11.2025
(51) Int. Cl.: H01R 13/52, H01R 13/506, H01R 43/00, B29C 45/14

(54) **REAR END COVER ASSEMBLY, MANUFACTURING MOLD AND CONNECTOR**

(30) Priority: 28.11.2024 CN 202422928729 U
(71) Applicant: Tyco Electronics (Shanghai) Co., Ltd., Pilot Free Trade Zone Shanghai 200131 (CN)
(72) Inventor: Wang, Ke, Suzhou, 215121 (CN); Zhu, Jianghua, Suzhou, 215121 (CN); Zhou, Xiao, Shanghai, 200233 (CN)
(74) Representative: Grünecker Patent- und Rechtsanwälte PartG mbB

(57) **Abstract**

The present invention discloses a rear end cover assembly, a manufacturing mold, and a connector. The rear end cover assembly is used for installation onto the rear end of a connector housing. The rear end cover assembly (100) comprises: a rear end cover (1) comprising an end wall (11) and a peripheral wall (12) that enclose an inner cavity (10), and an opening opposite to the end wall (11); and a sealing element (3) which is formed by a sealant (3') poured into the inner cavity (10) of the rear end cover (1). A slot hole (17) is formed in the end wall (11) to allow a cable of a connector to pass through, and a cable through-hole (30) is formed in the sealing element (3) to allow the cable to pass through, the cable through-hole (30) is suitable for interference fit with the cable to achieve sealing between the two. Before pouring the sealant (3'), the rear end cover (1) is fixed to a manufacturing mold (2) with the opening facing upwards, and a pin (22) on the manufacturing mold (2) extends into the inner cavity (10) of the rear end cover (1) through the slot hole (17) for forming the cable through-hole (30). The present invention can improve manufacturing efficiency and enhance sealing performance.

## Description

### CROSS-REFERENCE TO RELATED APPLICATION

This application claims the benefit of Chinese Patent Application No. CN202422928729.7 filed on November 28, 2024 in the State Intellectual Property Office of China, the whole disclosure of which is incorporated herein by reference.

### BACKGROUND OF THE INVENTION

### Field of the Invention

The present invention relates to a rear end cover assembly, a manufacturing mold for manufacturing the rear end cover assembly, and a connector comprising the rear end cover assembly.

### Description of the Related Art

In the prior art, a connector typically includes a housing, a terminal, a cable, a sealing element, and a rear end cover. The terminal is set in the housing. The rear end cover is installed onto the rear end of the housing. The seal is set in the rear end cover. The cable is connected to the rear end of the terminal and passes through the sealing element and rear end cover to be led out from the rear end of the housing. In the prior art, the sealing element and the rear end cover are two independent components manufactured separately, and the sealing element is inserted into the rear end cover. However, due to the presence of rib plates and other structures in the inner cavity of the rear end cover, this can lead to irregular internal cavity structure of the rear end cover. It is very difficult and time-consuming to manufacture irregular sealing element separately, which seriously reduces production efficiency and makes it difficult to ensure production quality. Once the quality is not up to standard, it will lead to seal failure. In addition, in the prior art, it is necessary to insert separately the manufactured sealing element into the rear end cover.

### SUMMARY OF THE INVENTION

The present invention has been made to overcome or alleviate at least one aspect of the above mentioned disadvantages.

According to an aspect of the present invention, there is provided a rear end cover assembly for installation onto the rear end of a connector housing. The rear end cover assembly comprises: a rear end cover comprising an end wall and a peripheral wall that enclose an inner cavity, and an opening opposite to the end wall; and a sealing element which is formed by a sealant poured into the inner cavity of the rear end cover. A slot hole is formed in the end wall to allow a cable of a connector to pass through, and a cable through-hole is formed in the sealing element to allow the cable to pass through, the cable through-hole is suitable for interference fit with the cable to achieve sealing between the two. Before pouring the sealant, the rear end cover is fixed to a manufacturing mold with the opening facing upwards, and a pin on the manufacturing mold extends into the inner cavity of the rear end cover through the slot hole for forming the cable through-hole.

According to an exemplary embodiment of the present invention, the rear end cover further comprises a first rib plate located in its inner cavity, wherein the first rib plate is connected to the peripheral wall and the end wall and is incorporated into the sealing element.

According to another exemplary embodiment of the present invention, the rear end cover further comprises a second rib plate located in its inner cavity, which is connected to the peripheral wall and the end wall and surrounds a sub cavity, and the sealant is poured into the cavity except for the sub cavity.

According to another exemplary embodiment of the present invention, the rear end cover further comprises a buckle protrusion formed on the inner side of the peripheral wall, wherein the rear end cover is adapted to be fitted onto the rear end of the connector housing, and the buckle protrusion is adapted to engage with a snap slot on the rear end wall of the connector housing to fix the rear end cover to the rear end of the connector housing.

According to another exemplary embodiment of the present invention, the sealing element has a lower end surface adhered to the end wall, a peripheral surface adhered to the peripheral wall, and an upper end surface opposite to the lower end surface; the buckle protrusion is located above the sealing element and is spaced a predetermined distance from the upper end surface of the sealing element.

According to another exemplary embodiment of the present invention, multiple cable through-holes are formed in the sealing element to allow multiple cables of the connector to pass through.

According to another exemplary embodiment of the present invention, a positioning protrusion is formed on the outer side of the end wall of the rear end cover, which is adapted to mate with a positioning recess on a base of the manufacturing mold, for positioning the rear end cover onto the base of the manufacturing mold.

According to another exemplary embodiment of the present invention, a positioning slot is formed on the outer side of the end wall of the rear end cover, which is adapted to mate with a positioning rib on the base of the manufacturing mold, for positioning the rear end cover onto the base of the manufacturing mold.

According to another aspect of the present invention, there is provided a manufacturing mold for manufacturing the above rear end cover assembly. The manufacturing mold comprises: a base which is formed with a positioning recess and/or a positioning rib for positioning the rear end cover; and a pin which is formed on the base. Before pouring the sealant, the rear end cover is fixed to the positioning recess of the base with the opening facing upwards, and the pin extends into the inner cavity of the rear end cover through the slot hole in the rear end cover for forming the cable through-hole.

According to an exemplary embodiment of the present invention, multiple pins are formed on the base, and the multiple pins extend into the inner cavity of the rear end cover through the slot holes in the rear end cover, for forming multiple cable through-holes.

According to another aspect of the present invention, there is provided a connector. The connector comprises: a housing; a terminal set in the housing; a cable electrically connected to the rear end of the terminal; and the above rear end cover assembly installed on the rear end of the housing. The cable passes through the cable through-hole in the sealing element and the slot hole in the end wall of the rear end cover to be led out from the rear end of the housing.

According to an exemplary embodiment of the present invention, the connector comprises multiple terminals and multiple cables connected to the multiple terminals respectively, and the multiple cables pass through multiple cable through-holes in the sealing element.

According to another exemplary embodiment of the present invention, a snap slot is formed on the rear end wall of the housing, which engages with the buckle protrusion on the inner side of the peripheral wall of the rear end cover to fix the rear end cover to the rear end of the housing.

In the aforementioned exemplary embodiments according to the present invention, the sealing element is formed by a sealant directly poured into the inner cavity of the rear end cover, and the cable through-hole in the sealing element is formed by a pin on the manufacturing mold. Therefore, the present invention can improve manufacturing efficiency and enhance sealing performance.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative perspective view of a rear end cover according to an exemplary embodiment of the present invention;
Figure 2 shows an illustrative perspective view of a manufacturing mold according to an exemplary embodiment of the present invention;
Figure 3 shows an illustrative exploded view of the rear end cover and manufacturing mold according to an exemplary embodiment of the present invention;
Figure 4 shows an illustrative assembly view of the rear end cover and manufacturing mold according to an exemplary embodiment of the present invention;
Figure 5 shows an illustrative view of injecting sealant into the rear end cover shown in Figure 4;
Figure 6 shows an illustrative view of removing the manufactured rear end cover assembly from the manufacturing mold shown in Figure 5; and
Figure 7 shows an illustrative exploded view of a rear end cover assembly according to an exemplary embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to an aspect of the present invention, there is provided a rear end cover assembly for installation onto the rear end of a connector housing. The rear end cover assembly comprises: a rear end cover comprising an end wall and a peripheral wall that enclose an inner cavity, and an opening opposite to the end wall; and a sealing element which is formed by a sealant poured into the inner cavity of the rear end cover. A slot hole is formed in the end wall to allow a cable of a connector to pass through, and a cable through-hole is formed in the sealing element to allow the cable to pass through, the cable through-hole is suitable for interference fit with the cable to achieve sealing between the two. Before pouring the sealant, the rear end cover is fixed to a manufacturing mold with the opening facing upwards, and a pin on the manufacturing mold extends into the inner cavity of the rear end cover through the slot hole for forming the cable through-hole.

According to another aspect of the present invention, there is provided a manufacturing mold for manufacturing the above rear end cover assembly. The manufacturing mold comprises: a base which is formed with a positioning recess and/or a positioning rib for positioning the rear end cover; and a pin which is formed on the base. Before pouring the sealant, the rear end cover is fixed to the positioning recess of the base with the opening facing upwards, and the pin extends into the inner cavity of the rear end cover through the slot hole in the rear end cover for forming the cable through-hole.

According to another aspect of the present invention, there is provided a connector. The connector comprises: a housing; a terminal set in the housing; a cable electrically connected to the rear end of the terminal; and the above rear end cover assembly installed on the rear end of the housing. The cable passes through the cable through-hole in the sealing element and the slot hole in the end wall of the rear end cover to be led out from the rear end of the housing.

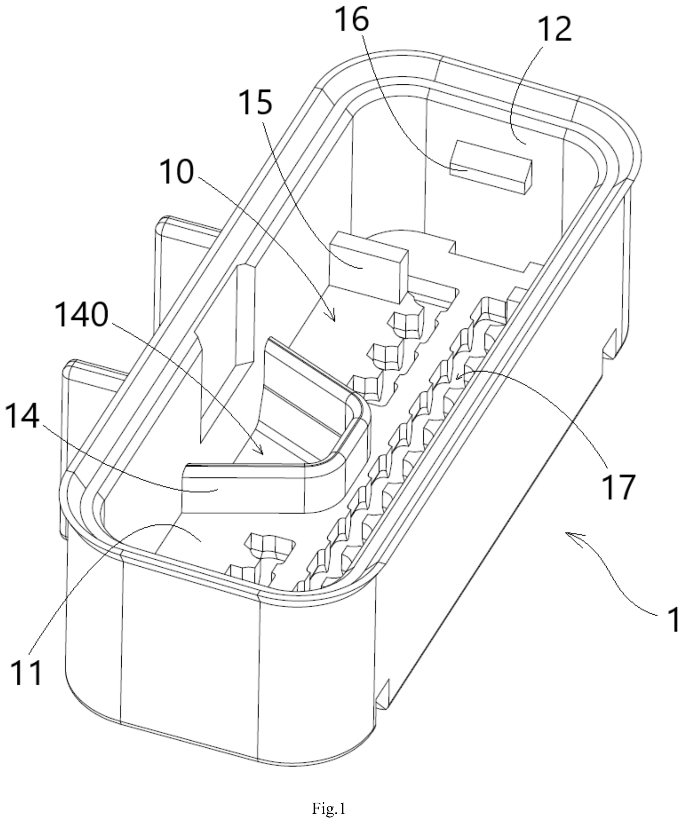

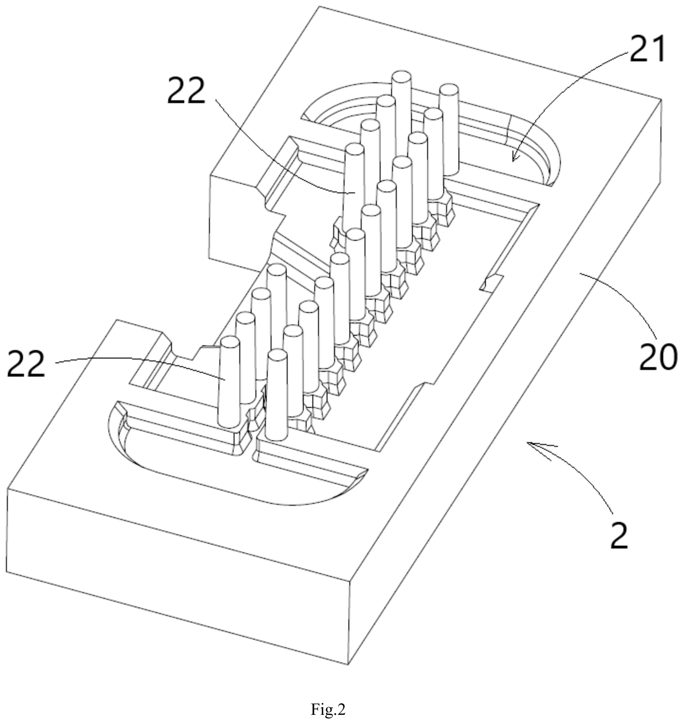

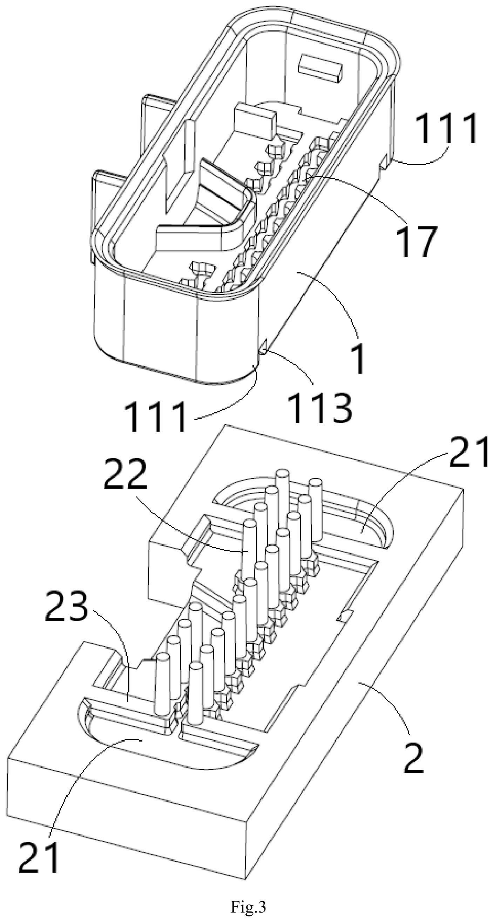

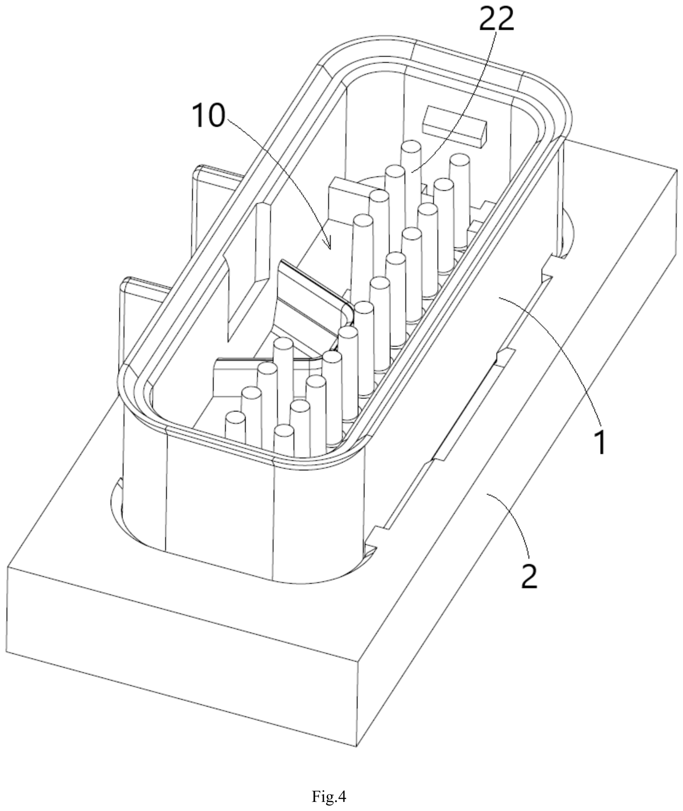

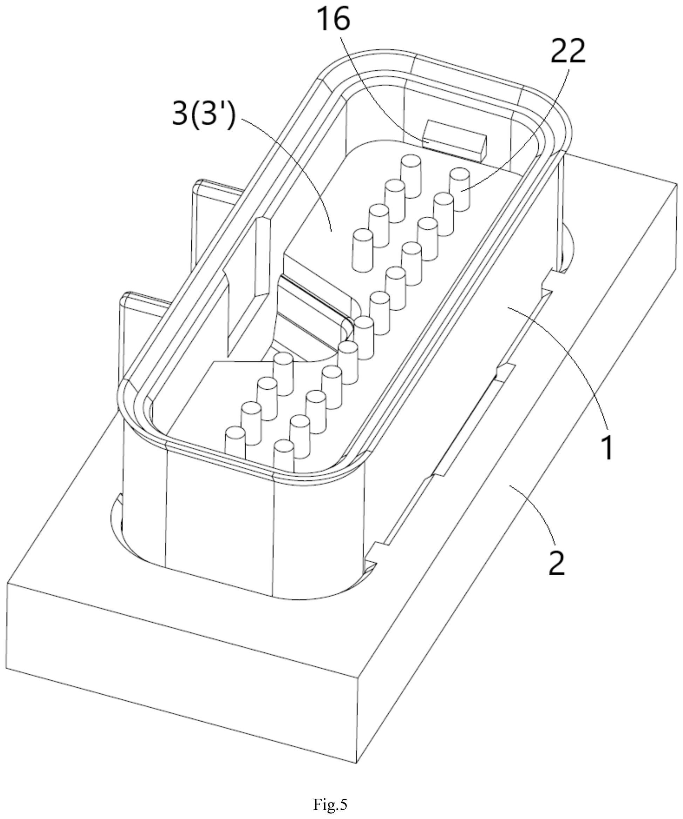

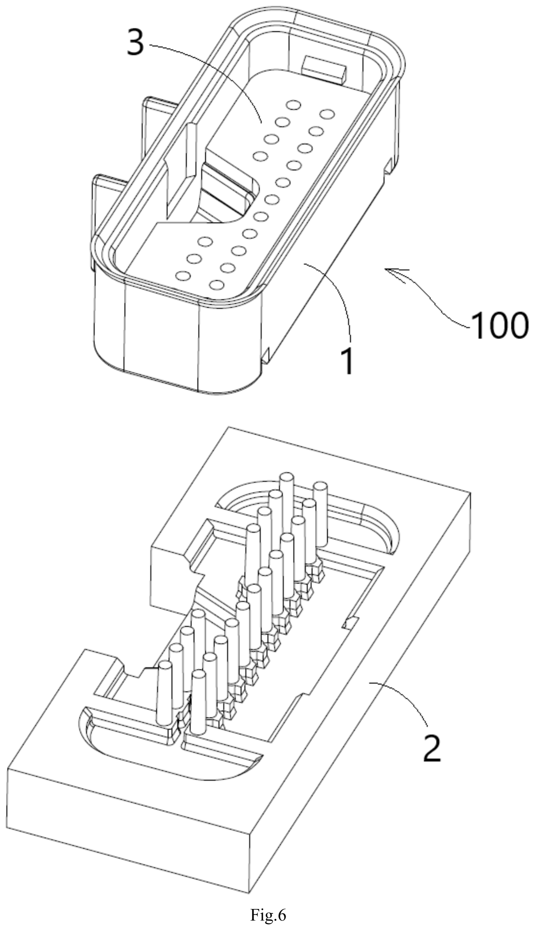

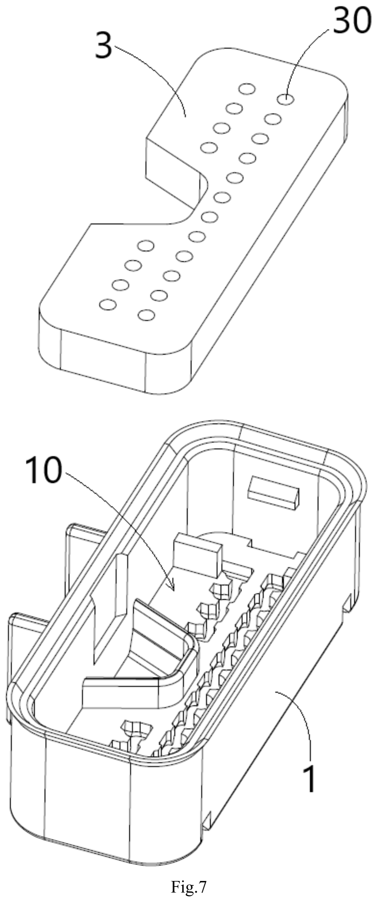

Figure 1 shows an illustrative perspective view of a rear end cover 1 according to an exemplary embodiment of the present invention; Figure 2 shows an illustrative perspective view of a manufacturing mold 2 according to an exemplary embodiment of the present invention; Figure 3 shows an illustrative exploded view of the rear end cover 1 and the manufacturing mold 2 according to an exemplary embodiment of the present invention; Figure 4 shows an illustrative assembly view of the rear end cover 1 and the manufacturing mold 2 according to an exemplary embodiment of the present invention; Figure 5 shows an illustrative view of injecting sealant 3'into the rear end cover 1 shown in Figure 4; Figure 6 shows an illustrative view of removing the manufactured rear end cover assembly 100 from the manufacturing mold 2 shown in Figure 5; Figure 7 shows an illustrative exploded view of the rear end cover assembly 100 according to an exemplary embodiment of the present invention.

As shown in Figures 1 to 7, in an exemplary embodiment of the present invention, a rear end cover assembly 100 is disclosed. The rear end cover assembly 100 is used to install onto the rear end of a connector housing (not shown). The rear end cover assembly 100 includes: a rear end cover 1 and a sealing element 3. The rear end cover 1 includes an end wall 11 and a peripheral wall 12 that enclose an inner cavity 10, as well as an opening opposite to the end wall 11. The sealing element 3 is formed by sealant 3' poured into the inner cavity 10 of the rear end cover 1. A slot hole 17 is formed in the end wall 11 to allow a cable (not shown) of the connector to pass through, and a cable through-hole 30 is formed in the sealing element 3 to allow the cable to pass through. The cable through-hole 30 is suitable for interference fit with the cable to achieve sealing between the two.

As shown in Figures 1 to 7, in the illustrated embodiment, before pouring the sealant 3', the rear end cover 1 is fixed to the manufacturing mold 2 with the opening facing upwards. The pin 22 on the manufacturing mold 2 extends into the inner cavity 10 of the rear end cover 1 through the slot hole 17 for forming the cable through-hole 30 in the sealing element 3.

As shown in Figures 1 to 7, in the illustrated embodiment, the rear end cover 1 further comprises a first rib plate 15 located in its inner cavity 10, which is connected to the peripheral wall 12 and the end wall 11 and is incorporated into the sealing element 3.

As shown in Figures 1 to 7, in the illustrated embodiment, the rear end cover 1 further includes a second rib plate 14 located in its inner cavity 10. The second rib plate 14 is connected to the peripheral wall 12 and the end wall 11 and surrounds a sub cavity 140. The sealant 3' is poured into the inner cavity 10 except for the sub cavity 140.

As shown in Figures 1 to 7, in the illustrated embodiment, the rear end cover 1 further includes a buckle protrusion 16 formed on the inner side of the peripheral wall 12. The rear end cover 1 is adapted to be fitted onto the rear end of the connector housing, and the buckle protrusion 16 is adapted to engage with a snap slot (not shown) on the rear end wall of the housing to fix the rear end cover 1 to the rear end of the housing.

As shown in Figures 1 to 7, in the illustrated embodiment, the sealing element 3 has a lower end surface adhered to the end wall 11, a peripheral surface adhered to the peripheral wall 12, and an upper end surface opposite to the lower end surface. The buckle protrusion 16 is located above the sealing element 3 and is spaced a predetermined distance from the upper end surface of the sealing element 3.

As shown in Figures 1 to 7, in the illustrated embodiment, multiple cable through-holes 30 are formed in the sealing element 3 to allow multiple cables of the connector to pass through.

As shown in Figures 1 to 7, in the illustrated embodiment, a positioning protrusion 111 is formed on the outer side of the end wall 11 of the rear end cover 1, which is suitable for mating with a positioning recess 21 on the base 20 of the manufacturing mold 2 to position the rear end cover 1 on the base 20 of the manufacturing mold 2.

As shown in Figures 1 to 7, in the illustrated embodiment, a positioning slot 113 is also formed on the outer side of the end wall 11 of the rear end cover 1. The positioning slot 113 is suitable for mating with a positioning rib 23 on the base 20 of the manufacturing mold 2, for positioning the rear end cover 1 onto the base 20 of the manufacturing mold 2.

As shown in Figures 1 to 7, in another exemplary embodiment of the present invention, a manufacturing mold 2 is also disclosed for manufacturing the aforementioned rear end cover assembly 100. The manufacturing mold 2 includes: a base 20 and a pin 22. The base 20 is formed with a positioning recess 21 and/or a positioning rib 23 for positioning the rear end cover 1. The pin 22 is formed on the base 20. Before pouring the sealant 3', the rear end cover 1 is fixed to the positioning recess 21 of the base 20 with the opening facing upwards. The pin 22 extends into the inner cavity 10 of the rear end cover 1 through the slot hole 17 in the rear end cover 1 for forming the cable through-hole 30.

As shown in Figures 1 to 7, in the illustrated embodiment, multiple pins 22 are formed on the base 20, and the multiple pins 22 extend into the inner cavity 10 of the rear end cover 1 through the slot holes 17 in the rear end cover 1, for forming multiple cable through-holes 30.

As shown in Figures 1 to 7, in another exemplary embodiment of the present invention, a connector is also disclosed. The connector includes a housing (not shown), a terminal (not shown), a cable (not shown), and the aforementioned rear end cover assembly 100. The terminal is set in the housing. The cable is electrically connected to the rear end of the terminal. The rear end cover assembly 100 is installed onto the rear end of the housing. The cable passes through the cable through-hole 30 in the sealing element 3 and the slot hole 17 in the end wall 11 of the rear end cover 1 to be led out from the rear end of the housing.

As shown in Figures 1 to 7, in the illustrated embodiment, the connector includes multiple terminals and multiple cables connected to the multiple terminals respectively. The multiple cables respectively pass through multiple cable through-holes 30 in the sealing element 3.

As shown in Figures 1 to 7, in the illustrated embodiment, a snap slot (not shown) is formed on the rear end wall of the housing, which engages with the buckle protrusion 16 on the inner side of the peripheral wall 12 of the rear end cover 1 to fix the rear end cover 1 to the rear end of the housing.

As shown in Figures 1 to 7, in another exemplary embodiment of the present invention, a method for manufacturing a rear end cover assembly is also disclosed, which includes the following steps:
S10: providing the aforementioned manufacturing mold 2;
S20: fixing the rear end cover 1 to the positioning recess 21 on the base 20 of the manufacturing mold 2 with the opening facing upwards;
S30: pouring sealant 3' into the inner cavity 10 of the rear end cover 1; and
S40: after the sealant 3' has cured, remove the rear end cover assembly 100 composed of the rear end cover 1 and the sealing element 3 formed in the inner cavity 10 of the rear end cover 1 from the manufacturing mold 2.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A rear end cover assembly for installation onto the rear end of a connector housing, wherein the rear end cover assembly (100) comprises:
a rear end cover (1) comprising an end wall (11) and a peripheral wall (12) that enclose an inner cavity (10), and an opening opposite to the end wall (11); and
a sealing element (3) which is formed by a sealant (3') poured into the inner cavity (10) of the rear end cover (1),
wherein a slot hole (17) is formed in the end wall (11) to allow a cable of a connector to pass through, and a cable through-hole (30) is formed in the sealing element (3) to allow the cable to pass through, the cable through-hole (30) is suitable for interference fit with the cable to achieve sealing between the two,
wherein before pouring the sealant (3'), the rear end cover (1) is fixed to a manufacturing mold (2) with the opening facing upwards, and a pin (22) on the manufacturing mold (2) extends into the inner cavity (10) of the rear end cover (1) through the slot hole (17) for forming the cable through-hole (30).

2. The rear end cover assembly according to claim 1,
wherein the rear end cover (1) further comprises a first rib plate (15) located in its inner cavity (10), wherein the first rib plate (15) is connected to the peripheral wall (12) and the end wall (11) and is incorporated into the sealing element (3).

3. The rear end cover assembly according to claim 1,
wherein the rear end cover (1) further comprises a second rib plate (14) located in its inner cavity (10), which is connected to the peripheral wall (12) and the end wall (11) and surrounds a sub cavity (140), and the sealant (3') is poured into the cavity (10) except for the sub cavity (140).

4. The rear end cover assembly according to claim 1,
wherein the rear end cover (1) further comprises a buckle protrusion (16) formed on the inner side of the peripheral wall (12), wherein the rear end cover (1) is adapted to be fitted onto the rear end of the connector housing, and the buckle protrusion (16) is adapted to engage with a snap slot on the rear end wall of the connector housing to fix the rear end cover (1) to the rear end of the connector housing.

5. The rear end cover assembly according to claim 4,
wherein the sealing element (3) has a lower end surface adhered to the end wall (11), a peripheral surface adhered to the peripheral wall (12), and an upper end surface opposite to the lower end surface; the buckle protrusion (16) is located above the sealing element (3) and is spaced a predetermined distance from the upper end surface of the sealing element (3).

6. The rear end cover assembly according to claim 1,
wherein multiple cable through-holes (30) are formed in the sealing element (3) to allow multiple cables of the connector to pass through.

7. The rear end cover assembly according to claim 1,
wherein a positioning protrusion (111) is formed on the outer side of the end wall (11) of the rear end cover (1), which is adapted to mate with a positioning recess (21) on a base (20) of the manufacturing mold (2), for positioning the rear end cover (1) onto the base (20) of the manufacturing mold (2).

8. The rear end cover assembly according to claim 1 or 7,
wherein a positioning slot (113) is formed on the outer side of the end wall (11) of the rear end cover (1), which is adapted to mate with a positioning rib (23) on the base (20) of the manufacturing mold (2), for positioning the rear end cover (1) onto the base (20) of the manufacturing mold (2).

9. A manufacturing mold for manufacturing the rear end cover assembly (100) according to any one of claims 1-8, wherein the manufacturing mold (2) comprises:
a base (20) which is formed with a positioning recess (21) and/or a positioning rib (23) for positioning the rear end cover (1); and
a pin (22) which is formed on the base (20),
wherein before pouring the sealant (3'), the rear end cover (1) is fixed to the positioning recess (21) of the base (20) with the opening facing upwards, and the pin (22) extends into the inner cavity (10) of the rear end cover (1) through the slot hole (17) in the rear end cover (1) for forming the cable through-hole (30).

10. The manufacturing mold (2) according to claim 9,
wherein multiple pins (22) are formed on the base (20), and the multiple pins (22) extend into the inner cavity (10) of the rear end cover (1) through the slot holes (17) in the rear end cover (1), for forming multiple cable through-holes (30).

11. A connector, comprising:
a housing;
a terminal set in the housing;
a cable electrically connected to the rear end of the terminal; and
the rear end cover assembly (100) according to any one of claims 1-8, installed on the rear end of the housing,
wherein the cable passes through the cable through-hole (30) in the sealing element (3) and the slot hole (17) in the end wall (11) of the rear end cover (1) to be led out from the rear end of the housing.

12. The connector according to claim 11,
wherein the connector comprises multiple terminals and multiple cables connected to the multiple terminals respectively, and the multiple cables pass through multiple cable through-holes (30) in the sealing element (3).

13. The connector according to claim 11,
wherein a snap slot is formed on the rear end wall of the housing, which engages with the buckle protrusion (16) on the inner side of the peripheral wall (12) of the rear end cover (1) to fix the rear end cover (1) to the rear end of the housing.
